## Europäisches Patentamt

## European Patent Office

## Office européen des brevets

(11) Numéro de publication: **0 171 318**
**B1**

---

(12) **FASCICULE DE BREVET EUROPEEN**

---

(45) Date de publication du fascicule du brevet:
**26.10.88**

(21) Numéro de dépôt: **85401401.6**

(22) Date de dépôt: **10.07.85**

(51) Int. Cl.⁴: **B 60 Q 1/06**

---

(54) **Dispositif de réglage de la position de projecteurs de véhicules.**

---

(30) Priorité: **01.08.84 FR 8412212**

(43) Date de publication de la demande:
**12.02.86 Bulletin 86/7**

(45) Mention de la délivrance du brevet:
**26.10.88 Bulletin 88/43**

(84) Etats contractants désignés:
**DE GB IT SE**

(56) Documents cités:
**FR - A - 969 642**

(73) Titulaire: **SOCIETE MANZONI-BOUCHOT, Zone Industrielle "Le Plan d'Acier" Boîte Postale No 9, F-39200 Saint-Claude (FR)**

(72) Inventeur: **Manzoni, Stéphane, 1, rue Pasteur, F-39200 Saint-Claude (FR)**

(74) Mandataire: **Descourtieux, Philippe et al, CABINET BEAU de LOMENIE 55 rue d'Amsterdam, F-75008 Paris (FR)**

---

ACTORUM AG

**Description**

La présente invention a pour objet un dispositif de réglage de la position de projecteurs de véhicules.

On connaît différents dispositifs permettant au conducteur de régler la position en site des projecteurs d'un véhicule en fonction de la charge du véhicule, depuis le poste de conduite.

Il est également connu de régler la position des projecteurs en azimut et en site au moyen d'un dispositif comprenant des vis rappelées par des ressorts.

Aucun de ces dispositifs ne présente des moyens simples permettant à la fois le réglage initial du faisceau de croisement et la commande à distance par le conducteur de l'inclinaison en site du faisceau de croisement.

La présente invention a pour objet un perfectionnement à ces dispositifs de réglage de projecteurs de véhicules.

Conformément à la présente invention, chaque projecteur présente à l'une des extrémités de son axe horizontal une articulation à rotule par laquelle il est monté sur la carrosserie du véhicule et à l'autre extrémité dudit axe le projecteur est monté sur un élément mobile au moyen de deux pivots dont l'un est situé suivant l'axe horizontal précité et dont l'autre est décalé par rapport à cet axe horizontal. L'un des dits pivots est attelé à un élément mobile monté coulissant horizontalement sur un support fixé sur la carrosserie, un moyen de réglage manuel en azimut étant prévu entre l'élément mobile et le support, ledit élément mobile comportant lui-même un moyen de réglage en site commandé sélectivement par un organe manuel et par un organe moteur, en vue d'entraîner le projecteur en rotation autour de son axe horizontal.

Le dispositif suivant l'invention est constitué pour chaque projecteur d'un ensemble compact qui permet de simplifier son montage sur le véhicule. Il permet d'une part, de simplifier le réglage initial du faisceau de croisement effectué manuellement, le véhicule vide, en fin de fabrication, et d'autre part, au conducteur de régler la position en site des projecteurs, en fonction de la charge du véhicule, depuis le poste de conduite.

La disposition suivant l'invention permet de régler indépendamment l'une de l'autre les positions du projecteur en azimut et en site, alors que, dans les dispositifs connus, et suivant la disposition des vis de réglage, le réglage d'une position peut entraîner le déréglage de l'autre.

Le dispositif permet une indépendance des deux mécanismes d'entraînement des projecteurs, de telle sorte que si un moteur tourne plus vite que l'autre il s'arrête lorsqu'il atteint la position prédéterminée alors que l'autre continue de fonctionner jusqu'à ce que l'autre projecteur atteigne la même position.

Chaque mécanisme peut être équipé d'un circuit de sécurité, de telle sorte que si le réglage était rendu impossible, bien que le moteur de l'un des mécanismes soit alimenté, le circuit de sécurité couperait l'alimentation de ce moteur tout en permettant le fonctionnement du moteur de l'autre mécanisme.

D'autres caractéristiques et avantages de l'invention seront mieux compris à la lecture de la description qui va suivre de plusieurs modes de réalisation et en se référant aux dessins annexés sur lesquels;

la figure 1 est une vue en plan d'un projecteur de véhicule et de son dispositif de réglage suivant l'invention;

la figure 2 est une vue en élévation latérale d'un projecteur et de son dispositif de réglage suivant l'invention;

la figure 3 est une vue en coupe longitudinale du dispositif de réglage de projecteur;

la figure 4 est une vue en coupe suivant la ligne IV-IV de la figure 3;

la figure 5 est une vue en coupe suivant la ligne V–V de la figure 3;

la figure 6 est une vue en plan du dispositif suivant la flèche VI;

la figure 7 est une vue en coupe suivant la ligne VII–VII de la figure 3;

la figure 8 est une vue en coupe suivant la ligne VIII–VIII de la figure 3.

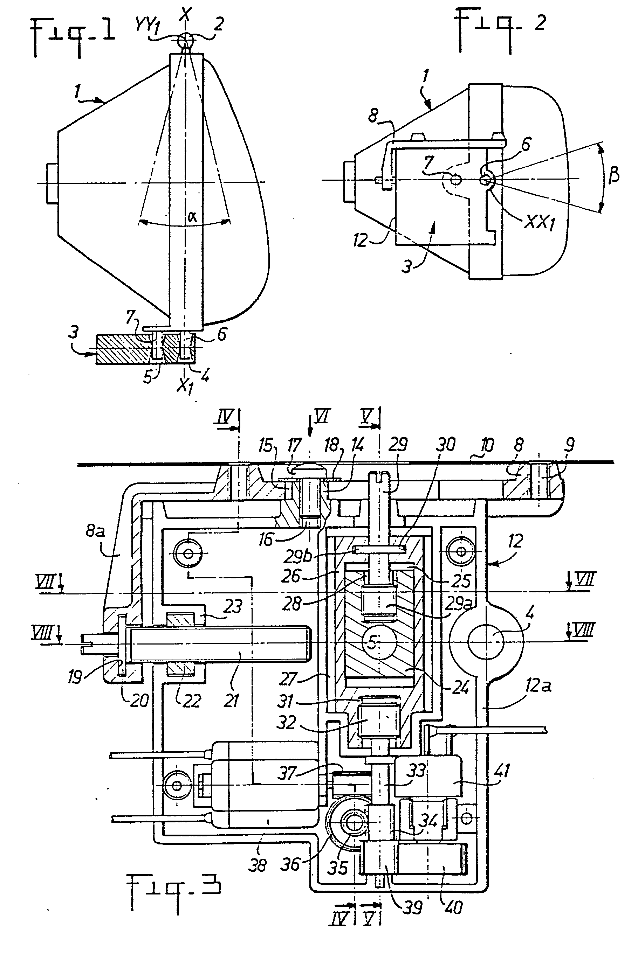

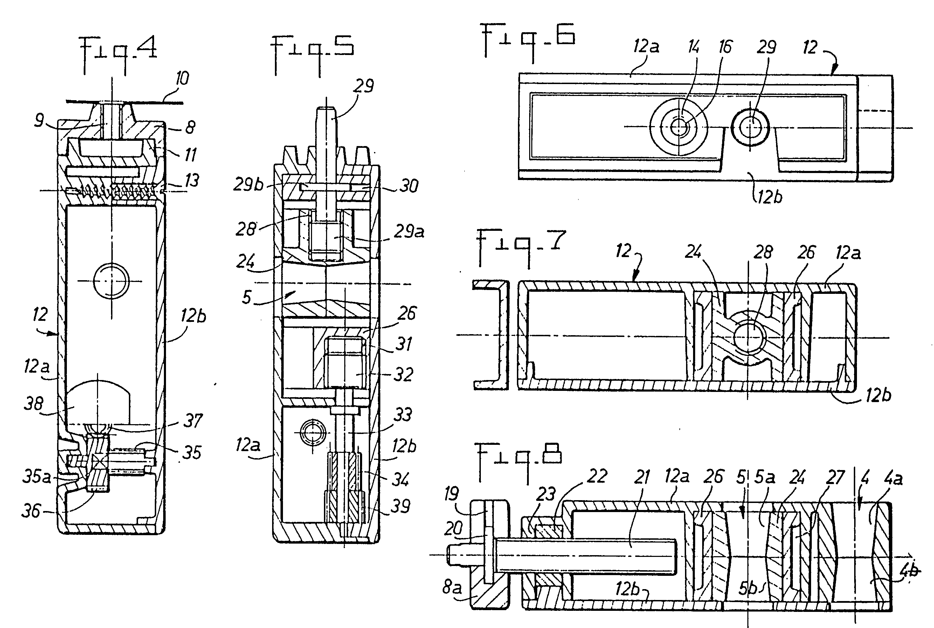

Aux figures 1 et 2 on a représenté un projecteur 1 de véhicule automobile qui est monté sur la carrosserie du véhicule (non représenté au dessin) par une articulation à rotule 2 située à l'une des extrémités de l'axe horizontal $XX_1$ du projecteur et par un dispositif de réglage 3 de la position du projecteur situé à l'autre extrémité de l'axe horizontal $XX_1$. Cette disposition étant destinée à permettre un réglage de la position du projecteur en azimut suivant un angle $\alpha$ par rotation autour d'un axe vertical $YY_1$ et en site autour d'un axe horizontal $XX_1$ suivant un angle $\beta$.

Le dispositif de réglage 3 (Fig. 1 et 2) présente deux trous 4 et 5 dans lesquels sont engagés respectivement un axe ou doigt 6 qui est situé suivant l'axe horizontal $XX_1$ dans le prolongement de celui-ci et un axe ou doigt 7 qui est décalé par rapport à l'axe $XX_1$.

Ce dispositif de réglage comprend un organe de support 8 qui présente des trous taraudés 9 dans lesquels sont engagées des vis (non représentées au dessin) qui assurent sa fixation sur un élément de carrosserie 10 (Fig. 3, 4). L'organe de support 8 présente une rainure 11 dans laquelle est montée coulissant un élément mobile 12 constitué d'un boîtier 12a fermé par un couvercle 12b fixé au moyen de vis 13 sur le boîtier 12a.

A sa partie supérieure (Fig. 3, 4, 5, 6, 7, 8) l'élément mobile 12 présente un bossage 14 qui est monté coulissant dans une fente 15 prévue dans l'organe de support, ledit bossage présentant un trou taraudé 16 dans lequel est engagée une vis 17 munie d'une rondelle 18 en appui contre les bords de la fente 15. De cette manière l'élément mobile 12 est maintenu dans la rainure 11 sur l'organe de support 18 et il est susceptible de coulisser horizontalement par rapport à ce support.

Sur un bras 8a, de l'organe de support 8 il est prévu un logement 19 dans lequel est maintenu prisonnière et rotative une collerette 20 d'une vis 21 dont la partie filetée est engagée dans un écrou 22 prisonnier et bloqué en rotation dans un logement 23 ménagé dans le boîtier 12a, la vis 21 ayant son axe parallèle à la direction du coulissement de l'élément mobile 12 par rapport à l'organe de support, elle permet par sa rotation d'obtenir le déplacement axial et horizontal de l'élément mobile 12 par rapport au support 8.

Un premier coulisseau 26 est monté coulissant verticalement dans une glissière 27 ménagée dans le boîtier 12a (Fig. 3, 5, 7, 8), cependant qu'un deuxième coulisseau 24 est monté coulissant verticalement dans un logement 25 du premier coulisseau. Le trou 4 destiné à recevoir le doigt 6 est ménagé dans la paroi du boîtier 12a, tandis que l'autre trou 5 destiné à recevoir le doigt 7 est ménagé dans le deuxième coulisseau 24.

Le deuxième coulisseau 24 présente un trou taraudé 28 dans lequel est engagé une partie filetée 29a d'une vis 29 présentant une collerette 29b montée prisonnière et rotative dans un logement 30 prévu dans le coulisseau 26. A sa base le premier coulisseau 26 présente un trou taraudé 31 dans lequel est engagée une partie filetée 32 d'un arbre 33 entraîné en rotation par un organe moteur.

A cet effet, l'arbre 33 porte un pignon 34 qui engrène avec un pignon 35 qui est solidaire par un carré 35a d'une roue tangente 36 qui engrène avec une vis sans fin 37 montée à l'extrémité d'un arbre d'un moteur électrique 38.

Sur l'arbre 33 est également calé un pignon 39 qui engrène avec un pignon 40 monté sur l'arbre d'entraînement d'un potentiomètre 41 capteur de position du projecteur.

Les trous 4 et 5 dans lesquels sont engagés les doigts 6 et 7 du projecteur présentent deux parties tronconiques 4a, 4b; et 5a, 5b, afin de permettre le débattement des doigts 6, 7 lors du déplacement en rotation du projecteur 1.

Le dispositif de réglage de la position des projecteurs fonctionne de la manière suivante; lors de la première utilisation du véhicule, ou lors des contrôles annuels, on procède au réglage manuel du projecteur en azimut suivant l'angle α (Fig. 1) et dans ce but, l'utilisateur agit sur la vis 21 ce qui provoque le coulissement de l'élément mobile 12 par rapport à l'organe de support 8 (Fig. 3). La vis de blocage 17 a été préalablement desserrée pour permettre le déplacement de l'élément mobile 12. Les deux doigts 6, 7 sont entraînés, ce qui provoque une rotation du projecteur 1 autour de l'axe YY₁ c'est-à-dire en azimut suivant l'angle α. Lorsque le réglage est effectué on procède au serrage de la vis 17 pour empêcher tout déréglage ultérieur du projecteur.

Pour procéder au réglage manuel du projecteur en site suivant l'angle β (Fig. 2) l'utilisateur agit sur la vis 29, de telle sorte que par la partie filetée 29a de la vis 29, fixe par rapport au premier coulisseau 26, on provoque le déplacement vertical du deuxième coulisseau 24 et par suite celui du doigt 7, ce qui assure le pivotement du phare autour de l'axe horizontal XX₁ suivant un angle β.

Lorsque le conducteur veut modifier l'angle de site β en raison d'une variation de charge du véhicule, il agit sur la commande (non représentée) du circuit d'alimentation du moteur 38, en fonction de la position indiquée par le capteur 41.

Dans ce but, le moteur 38 est alimenté pour être entraîné dans un sens ou dans l'autre et il assure de ce fait par la vis 37, la roue tangente 36 et les pignons 35 et 34, l'entraînement en rotation de l'arbre 33 qui provoque la rotation de la partie filetée 32 dans le trou taraudé 31 et le coulissement vertical du coulisseau 26 dans sa glissière 27.

Comme le coulisseau 24 est lié au coulisseau 26, il est également entraîné verticalement ce qui provoque le pivotement du projecteur 1 autour de l'axe horizontal XX₁ suivant un angle de site β.

Le mécanisme décrit ci-dessus concerne le réglage d'un seul projecteur, équipé de son capteur de position 41. En réalité, deux moteurs 38 sont montés en parallèle (un moteur par projecteur), chacun d'eux étant associé à son capteur de position 41, ce qui permet un réglage identique des deux phares même si l'un des moteurs d'asservissement tourne plus vite que l'autre.

## Revendications

1. Dispositif de réglage de la position en azimut et en site de projecteur de véhicule caractérisé en ce que chaque projecteur (1) présente, à l'une des extrémités de son axe horizontal (XX₁), une articulation à rotule (2) par laquelle il est monté sur la carrosserie du véhicule, cependant qu'à son autre extrémité, ledit projecteur comporte deux pivots (6, 7) dont l'un (6) est situé suivant l'axe horizontal (XX₁) et dont l'autre (7) est décalé par rapport à l'axe horizontal (XX₁), l'un desdits pivots étant attelé à un élément mobile (12) monté coulissant horizontalement sur un support (8) fixé sur la carrosserie (10), un moyen de réglage manuel (21) en azimut étant prévu entre l'élément mobile (12) et le support (8), ledit élément mobile 12 comportant lui-même un moyen de réglage (24, 26) en site attelé au pivot décalé (7) et commandé sélectivement par un organe manuel (29) et par un organe moteur (38) en vue d'entraîner le projecteur (1) en rotation autour de son axe horizontal (XX₁).

2. Dispositif selon la revendication 1, caractérisé en ce que l'élément mobile (12) est constitué par un boîtier (12a) dans lequel est monté coulissant un premier coulisseau (26) attelé au pivot décalé (7), ledit coulisseau présentant un trou taraudé (31) dans lequel et engagée la partie filetée d'un arbre (33) relié à l'organe moteur (38).

3. Dispositif selon la revendication 2, caractérisé en ce que l'organe moteur (38) est un moteur électrique relié à l'arbre (33) par une transmission à engrenages (34, 35, 36, 37).

4. Dispositif selon la revendication 1, caractérisé en ce que le moyen de réglage manuel en azimut est constitué par une vis (21) présentant une collerette (20) montée prisonnière en rotation libre dans l'organe de support (8), la partie filetée de ladite vis étant engagée dans un écrou (22) lié à l'élément mobile (12).

5. Dispositif selon la revendication 2, caractérisé en ce que le premier coulisseau (26) comporte un logement (25) muni de glissière verticales qui constituent des guides pour un deuxième coulisseau (24), ce dernier présentant, d'une part un trou (5) recevant le pivot décalé (7), d'autre part un trou taraudé (28) recevant une vis (29a) montée librement en rotation par rapport au coulisseau (26), mais fixée en translation par rapport à celui-ci.

6. Dispositif selon la revendication 3, caractérisé en ce que l'arbre de transmission (33) porte un pignon (40) monté sur l'arbre de commande d'un capteur (41) de la position du projecteur.

7. Dispositif selon la revendication 6, caractérisé en ce que le capteur de position (41) est un potentiomètre.

## Patentansprüche

1. Einrichtung zur Einstellung der Azimut- und Elevationswinkelposition von Fahrzeugscheinwerfern, dadurch gekennzeichnet, dass jeder Scheinwerfer (1) an einem der Enden seiner horizontalen Achse ($XX_1$) ein Gelenklager (2) aufweist, mittels dessen er an der Karosserie des Fahrzeugs angebracht ist, während der Scheinwerfer an seinem anderen Ende zwei Zapfen (6, 7) umfasst, von denen einer (6) folgend der horizontalen Achse ($XX_1$) liegt und von denen der andere (7) in bezug auf die horizontale Achse ($XX_1$) versetzt ist, wobei der eine der Zapfen an einem beweglichen Element (12) angekoppelt ist, das horizontal auf einer an der Karosserie (10) befestigten Stütze (8) verschiebbar angebracht ist, wobei zwischen dem beweglichen Element (12) und der Stütze (8) ein Mittel zur manuellen Azimut-Einstellung (21) vorgesehen ist, wobei das bewegliche Element (12) selbst ein Mittel zur Elevationswinkel-Einstellung (24, 26) umfasst, das an dem versetzten Zapfen (7) angekuppelt ist und durch ein manuelles Organ (29) und durch ein Antriebsorgan (38) selektiv betätigt wird, um den Scheinwerfer (1) in Rotation um seine horizontale Achse ($XX_1$) anzutreiben.

2. Einrichtung nach Anspruch 1, dadurch gekennzeichnet, dass das bewegliche Element (12) durch ein Gehäuse (12a) gebildet ist, in dem ein erstes Gleitstück (26) verschiebbar angebracht ist, das an dem versetzten Zapfen (7) angekuppelt ist, wobei das Gleitstück ein Gewindeloch (31) aufweist, in dem der gewindeversehene Teil einer mit dem Antriebsorgan (38) verbundenen Welle (33) in Eingriff steht.

3. Einrichtung nach Anspruch 2, dadurch gekennzeichnet, dass das Antriebsorgan (38) ein elektrischer Motor ist, der durch ein Zahnradgetriebe (34, 35, 36, 37) mit der Welle (33) verbunden ist.

4. Vorrichtung nach Anspruch 1, dadurch gekennzeichnet, dass das Mittel zur manuellen Azimut-Einstellung durch eine Schraube (21) gebildet ist, die einen im Stützorgan (8) in freier Rotation eingeschlossenen, angebrachten Kragen (20) aufweist, wobei der gewindeversehene Teil der Schraube in Eingriff in einer mit dem beweglichen Element (12) verbundenen Mutter (22) steht.

5. Einrichtung nach Anspruch 2, dadurch gekennzeichnet, dass das erste Gleitstück (26) ein Lager (25) umfasst, das mit vertikalen Gleitflächen ausgestattet ist, die Führungen für ein zweites Gleitstück (24) bilden, wobei das letztere zum einen ein den versetzten Zapfen (7) aufnehmendes Loch (5), zum anderen ein Gewindeloch (28) aufweist, das eine Schraube (29a) aufnimmt, die frei in Rotation in bezug auf das Gleitstück (26), aber in Translation in bezug auf dieses fest angebracht ist.

6. Einrichtung nach Anspruch 3, dadurch gekennzeichnet, dass die Getriebewelle (33) ein Zahnrad (40) trägt, das an der Welle zur Betätigung eines Aufnehmers (41) der Position des Scheinwerfers angebracht ist.

7. Einrichtung nach Anspruch 6, dadurch gekennzeichnet, dass der Positionsaufnehmer (41) ein Potentiometer ist.

## Claims

1. Device for adjusting the position in azimuth and in elevation of a vehicle headlamps, characterized in that each headlamp (1) is provided at one of the ends of its horizontal axis ($XX_1$), with a swivel joint (2) by which it is mounted on the bodywork of the vehicle, whereas at its other end, said headlamp comprises two pins (6, 7) one of which (6) is situated along and in line with horizontal axis ($XX_1$), and the other (7) is offset with respect to horizontal axis ($XX_1$), one of said pins being coupled to a movable element (12) mounted for sliding horizontally on a support (8) fixed on the bodywork (10), manual adjusting means (21) for adjusting in azimuth being provided between the mobile element (12) and the support (8), said movable element (12) being itself provided with means (24, 26) for adjusting in elevation, coupled to the offset pin (7) and controlled selectively by a manual control (29) and by a drive member (38) with a view to driving the headlamp (1) in rotation about its horizontal axis ($XX_1$).

2. Device according to claim 1, characterized in that the movable element (12) is constituted by a box (12a) in which a first slide block (26) is mounted for sliding, said first slide block being coupled to the offset pin (7) and being provided with a tapped hole (31) in which is engaged the threaded part of a shaft (33) connected to the drive member (38).

3. Device according to claim 2, characterized in that the drive member (38) is an electric motor connected to the shaft (33) via a gear transmission (34, 35, 36, 37).

4. Device according to claim 1, characterized in that the means for manual adjustment in azimuth is constituted by a screw (21) provided with a flange (20) which is rotatably trapped in free rotation in the support member (8), the threaded part of said screw being engaged in a nut (22) joined to the movable element (12).

5. Device according to claim 2, characterized in that the first slide block (26) comprises a housing (25) equipped with vertical slide rails which constitute guides for a second slide block (24), which latter is provided, on the one hand, with a hole (5) receiving the offset pin (7), and on the other hand, with a tapped hole (28) receiving a screw (29a) mounted for free rotation with respect to slide block (26), but fixed in translation with respect to the latter.

6. Device according to claim 3, characterized in that the transmission shaft (33) carries a pinion (40) mounted on the control shaft of a sensor (41) of the position of the headlamp.

7. Device according to claim 6, characterized in that the position sensor (41) is a potentiometer.

Fig. 1

Fig. 2

Fig. 3

Fig.4

10
9
8
11
13
12
12b
12a
38
37
35
35a
36

Fig.5

29
29b
30
28
24
5
26
31
32
33
12a
12b
34
39

Fig.6

12a  14  16  29  12
12b

Fig.7

12  24  28  26  12a
12b

Fig.8

19
20
8a
23
22
21  12a  26  5  5a  24  27  4  4a
12b  5b
4b

0 171 318

9